# EUROPÄISCHE PATENTANMELDUNG

(11) **EP 3 712 763 A1**
(43) Veröffentlichungstag der Anmeldung: **23.09.2020**
(21) Anmeldenummer: 19164340.2
(22) Anmeldetag: 21.03.2019
(51) Int. Cl.: G06F 8/51, G06F 8/76

(54) **VERFAHREN ZUR COMPUTER-IMPLEMENTIERTEN MIGRATION EINER SOFTWARE-ENTWICKLUNGS-UMGEBUNG VON EINEM RECHNER AUF EINE HARDWAREKOMPONENTE FÜR EINE AUTOMATISIERUNGSANLAGE**

(71) Anmelder: Siemens Aktiengesellschaft, 80333 München (DE)
(72) Erfinder: Liu, Kai, 90562 Heroldsberg (DE)

(57) **Zusammenfassung**

Die Erfindung betrifft ein Verfahren zur computerimplementierten Migration einer Software-Entwicklungs-Umgebung (TP1) von einem Rechner (1) auf eine Hardwarekomponente (2) für eine Automatisierungsanlage, wobei die Software-Entwicklungs-Umgebung (TP1) einen ersten Programmbaustein (PR1) in einer ersten Programmiersprache zur Ausführung auf dem Betriebssystem (OS1) des Rechners (1), einen zweiten Programmbaustein (PR2) in einer zweiten Programmiersprache zur Ausführung in einer Laufzeitumgebung (RT1) unter dem Betriebssystem (OS1) des Rechners (1) sowie einen dritten Programmbaustein (PR3) in einer dritten Programmiersprache zur Ausführung in der Laufzeitumgebung (RT1) unter dem Betriebssystem (OS1) des Rechners (1) umfasst, wobei dem ersten Programmbaustein (PR1) eine erste Schnittstelle (IF1) in der ersten Programmiersprache zugeordnet ist, auf welche der zweite Programmbaustein (PR2) zugreift, und wobei dem zweiten Programmbaustein (PR2) eine zweite Schnittstelle (IF2) zugeordnet ist, auf welche der dritte Programmbaustein (PR3) zugreift. Durch eine geeignete Wandlung des zweiten Programmbausteins (PR2) in einen äquivalenten Programmbaustein (PR4) in der ersten Programmiersprache sowie der zweiten Schnittstelle (IF2) in äquivalente Schnittstellen wird automatisch eine migrierte Software-Entwicklungs-Umgebung auf dem Betriebssystem (OS2) der Hardware-Komponente (2) und in einer Laufzeitumgebung (RT2) unter dem Betriebssystem (OS2) der Hardware-Komponente (2) erzeugt.

## Beschreibung

Die Erfindung betrifft ein Verfahren und eine Vorrichtung zur computer-implementierten Migration einer Software-Entwicklungs-Umgebung von einem Rechner auf eine Hardwarekomponente für eine Automatisierungsanlage. Ferner betrifft die Erfindung ein Computerprogrammprodukt, ein Computerprogramm sowie eine Hardwarekomponente für eine Automatisierungsanlage.

Aus dem Stand der Technik ist es bekannt, Software für Hardwarekomponenten einer Automatisierungsanlage nicht auf der Hardwarekomponente selbst zu entwickeln, sondern hierfür einen separaten Rechner, wie z.B. einen PC, zu nutzen. Auf dem separaten Rechner läuft dabei eine Software-Entwicklungs-Umgebung, um die Software für die Hardwarekomponente zu erstellen. Diese Software-Entwicklungs-Umgebung umfasst in der Regel mehrere unterschiedliche Programmbausteine, von denen ein Teil direkt auf dem Betriebssystem des Rechners und ein anderer Teil in einer Laufzeitumgebung unter dem Betriebssystem des Rechners läuft.

Oftmals ist es wünschenswert, die Software-Entwicklungs-Umgebung statt auf einem separaten Rechner direkt auf der Hardwarekomponente laufen zu lassen, für welche die Software erstellt werden soll. Hierfür ist es jedoch erforderlich, dass die Software-Entwicklungs-Umgebung von dem separaten Rechner auf die Hardwarekomponente migriert wird. Da Hardwarekomponenten in Automatisierungsanlagen meist ein anderes Betriebssystem bzw. eine andere Laufzeitumgebung als der separate Rechner nutzen, müssen Mechanismen bereitgestellt werden, um die ursprünglich von dem separaten Rechner stammende Software-Entwicklungs-Umgebung auf der Hardwarekomponente lauffähig zu machen.

Eine nahtlose Migration der Software-Entwicklungs-Umgebung von dem separaten Rechner zur Hardwarekomponente könnte dadurch erreicht werden, dass in dem separaten Rechner eine virtuelle Maschine mit vorinstalliertem Betriebssystem und darin implementierter Laufzeitumgebung genutzt wird. Eine virtuelle Maschine fügt jedoch eine zusätzliche Virtualisierungs-Schicht hinzu und braucht viel Systemressourcen, die in einer Hardwarekomponente einer Automatisierungsanlage in der Regel nicht zur Verfügung stehen.

Alternativ könnte eine Kompatibilitäts-Schicht (wie z.B. WINE) auf dem separaten Rechner genutzt werden. Diese Schicht ermöglicht es, dass Applikationen im Betriebssystem des separaten Rechners auch im Betriebssystem der Hardwarekomponente laufen. Jedoch hat die Einführung einer Kompatibilitäts-Schicht ebenfalls den Nachteil, dass viel Systemressourcen benötigt werden, die in einer Hardwarekomponente einer Automatisierungsanlage nicht vorhanden sind.

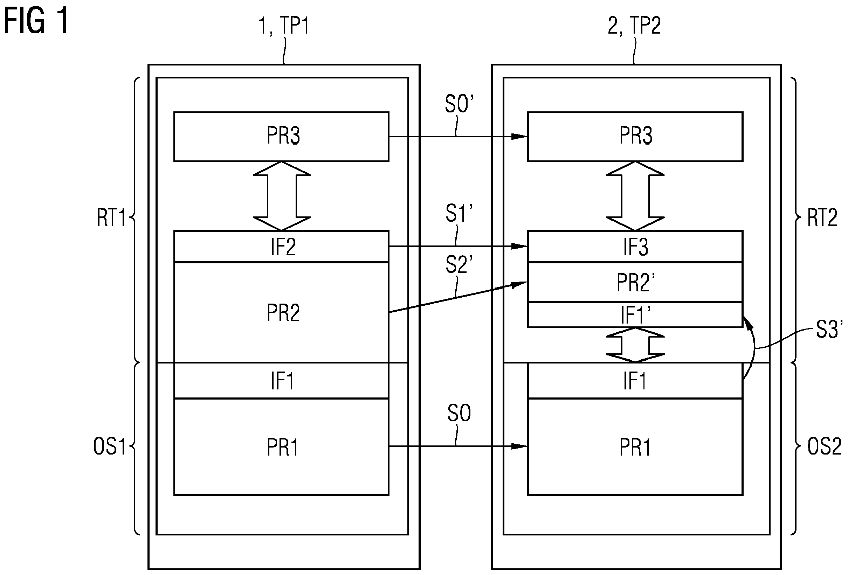

Darüber hinaus gibt es im Stand der Technik einen Ansatz, der eine Migration einer Software-Entwicklungs-Umgebung von einem separaten Rechner auf eine Hardwarekomponente einer Automatisierungsanlage unter Einbeziehung von manuellen, durch einen Benutzer durchgeführten Schritten ermöglicht. Diese manuelle Migration wird in der detaillierten Beschreibung anhand von Fig. 1 beschrieben. Da diese Migration manuelle Schritte beinhaltet, ist sie sehr zeitaufwändig und fehleranfällig.

Aufgabe der Erfindung ist es, ein Verfahren zu computer-implementierten Migration einer Software-Entwicklungs-Umgebung von einem Rechner auf eine Hardwarekomponente für eine Automatisierungsanlage zu schaffen, das die obigen Nachteile beseitigt und die Migration automatisch durchführt.

Diese Aufgabe wird durch das Verfahren gemäß Patentanspruch 1 bzw. die Vorrichtung gemäß Patentanspruch 9 bzw. das Computerprogrammprodukt gemäß Patentanspruch 11 bzw. das Computerprogramm gemäß Patentanspruch 12 bzw. die Hardwarekomponente gemäß Anspruch 13 gelöst. Weiterbildungen der Erfindung sind in den abhängigen Ansprüchen definiert.

Das erfindungsgemäße Verfahren dient zur computer-implementierten Migration einer Software-Entwicklungs-Umgebung von einem Rechner auf eine Hardwarekomponente für eine Automatisierungsanlage. In einer bevorzugten Ausführungsform handelt es sich bei dem Rechner um einen PC (Personal Computer). In einer weiteren bevorzugten Ausführungsform ist die Hardwarekomponente eine speicherprogrammierbare Steuerung, die häufig auch als PLC (Programmable Logic Controller) bezeichnet wird.

Die ausführbare Software-Entwicklungs-Umgebung auf dem Rechner liegt als compilierter Code in der Form von compilierten Programmbausteinen und compilierten Schnittstellen vor. Im Rahmen des erfindungsgemäßen Verfahrens wird der Sourcecode der Software-Entwicklungs-Umgebung in der Form entsprechender uncompilierter Programmbausteine bzw. Schnittstellen verarbeitet. Dabei ist zu beachten, dass die nachfolgend definierten Funktionen von Programmbausteinen und Schnittstellen erst nach Compilierung implementiert sind.

Die Software-Entwicklungs-Umgebung umfasst einen ersten Programmbaustein in einer ersten Programmiersprache zur Ausführung (nach Compilierung) auf dem Betriebssystem des Rechners, einen zweiten Programmbaustein in einer zweiten Programmiersprache zur Ausführung (nach Compilierung) in einer Laufzeitumgebung unter dem Betriebssystem des Rechners sowie einen dritten Programmbaustein in einer dritten Programmiersprache zur Ausführung (nach Compilierung) in der Laufzeitumgebung unter dem Betriebssystem des Rechners. Dabei ist dem ersten Programmbaustein eine erste Schnittstelle in der ersten Programmiersprache zugeordnet, auf welche der zweite Programmbaustein über Schnittstellenfunktionen zum Aufruf von Routinen des ersten Programmbausteins zugreift. Ferner ist dem zweiten Programmbaustein eine zweite Schnittstelle zugeordnet, auf welche der dritte Programmbaustein über Schnittstellenfunktionen zum Aufruf von Routinen des zweiten Programmbausteins zugreift. Mit anderen Worten liegt eine Struktur aus einem nativen ersten Programmbaustein auf der Ebene des Betriebssystems des Rechners, einem daran gekoppelten zweiten Programmbaustein auf der Ebene der Laufzeitumgebung und einem weiteren dritten Programmbaustein wiederum auf der Ebene der Laufzeitumgebung vor.

Das erfindungsgemäße Verfahren zeichnet sich durch die nachfolgenden Schritte a) bis e) aus, welche automatisch durchgeführt werden. Die Anordnung bzw. Bezeichnung dieser Schritte spiegelt dabei nicht deren Ausführungsreihenfolge wider. Vielmehr kann ein später definierter Schritt auch vor einem früher definierten Schritt ausgeführt werden, sofern der später definierte Schritt nicht das Ergebnis des früher definierten Schritts benötigt.

Im Schritt a) wird aus der zweiten Schnittstelle eine äquivalente dritte Schnittstelle (d.h. eine Schnittstelle mit den gleichen Schnittstellenfunktionen wie die zweite Schnittstelle) in der dritten Programmiersprache erzeugt, wobei der dritte Programmbaustein auf die dritte Schnittstelle zugreift. In einem Schritt b) wird aus der zweiten Schnittstelle ferner eine äquivalente vierte Schnittstelle (d.h. mit den gleichen Schnittstellenfunktionen wie die zweite Schnittstelle) in der ersten Programmiersprache erzeugt. In einem Schritt c) wird der zweite Programmbaustein in einen äquivalenten vierten Programmbaustein (d.h. mit den gleichen Routinen wie der zweite Programmbaustein) in der ersten Programmiersprache gewandelt und die vierte Schnittstelle wird dem vierten Programmbaustein zugeordnet.

Ferner wird in einem Schritt d) aus der vierten Schnittstelle eine fünfte Schnittstelle erzeugt, welche Schnittstellenfunktionen der dritten Schnittstelle in Schnittstellenfunktionen der vierten Schnittstelle wandelt. Schließlich wird in einem Schritt e) der erste Programmbaustein mit zugeordneter erster Schnittstelle und der vierte Programmbaustein mit zugeordneter vierter Schnittstelle auf dem Betriebssystem der Hardwarekomponente compiliert und der dritte Programmbaustein sowie die dritte und fünfte Schnittstelle werden in einer Laufzeitumgebung unter dem Betriebssystem der Hardwarekomponente compiliert. Hierdurch wird eine migrierte Software-Entwicklungs-Umgebung auf der Hardwarekomponente erzeugt.

Das erfindungsgemäße Verfahren ermöglicht die Umsetzung einer Software-Entwicklungs-Umgebung von einem Betriebssystem und einer Laufzeitumgebung eines separaten Rechners auf das Betriebssystem und die Laufzeitumgebung einer Hardwarekomponente einer Automatisierungsanlage. Dabei kann die Laufzeitumgebung der Hardwarekomponente Programmbausteine in der zweiten Programmiersprache nicht verarbeiten. Die Schritte des erfindungsgemäßen Verfahrens werden automatisch durchgeführt, was unter anderem dadurch erreicht werden kann, dass der zweite Programmbaustein in die erste Programmiersprache und nicht in die dritte Programmiersprache gewandelt wird.

In einer bevorzugten Ausführungsform ist das Betriebssystem des Rechners Windows und die Laufzeitumgebung unter dem Betriebssystem des Rechners (d.h. unter Windows) ist das an sich bekannte .NET Framework. Vorzugsweise ist dabei die erste Programmiersprache C++ und/oder die zweite Programmiersprache C++/CLI und/oder die dritte Programmiersprache C#. Programmbausteine in den Programmiersprachen C++/CLI und C# werden dabei zum Compilierungszeitpunkt in die Zwischensprache CIL (CIL = Common Intermediate Language) übersetzt. Die so entstandenen compilierten Programmbausteine werden bei deren Ausführung in Maschinensprache gewandelt. In einer besonders bevorzugten Variante ist die erste Programmiersprache C++, die zweite Programmiersprache C++/CLI und die dritte Programmiersprache C#.

In einer bevorzugten Ausgestaltung der obigen Ausführungsform wird die Erzeugung der dritten Schnittstelle aus der zweiten Schnittstelle in Schritt a) des erfindungsgemäßen Verfahrens mittels des an sich bekannten Tools Visual Studio IDE bewirkt. Die Erzeugung der dritten Schnittstelle mittels dieses Tools liegt im Rahmen von fachmännischem Handeln.

In einer weiteren bevorzugten Ausführungsform ist die fünfte Schnittstelle eine sog. P/Invoke-Schnittstelle, wobei der P/Invoke-Mechanismus dem Fachmann hinlänglich bekannt ist. Vorzugsweise wird diese P/Invoke-Schnittstelle mit dem an sich bekannten Open-Source-Tool CppSharp generiert.

In einer weiteren bevorzugten Ausführungsform ist das Betriebssystem der Hardwarekomponente Linux, das in der Regel in Hardwarekomponenten von Automatisierungsanlagen zum Einsatz kommt. Für Linux existiert bis dato nicht die oben genannte Laufzeitumgebung .NET Framework. Stattdessen wird als Laufzeitumgebung beispielsweise die an sich bekannte Laufzeitumgebung .NET Core verwendet. Im Unterschied zu dem .NET Framework kann .NET Core keine C++/CLI-Programmbausteine verarbeiten.

In einer weiteren bevorzugten Ausgestaltung ist die zu migrierende Software-Entwicklungs-Umgebung und in diesem Sinne auch die migrierte Software-Entwicklungs-Umgebung ein sog. TIA-Portal, das von der Siemens AG entwickelt wurde (TIA = Totally Integrated Automation).

Neben dem oben beschriebenen Verfahren betrifft die Erfindung eine Vorrichtung zur computer-implementierten Migration einer Software-Entwicklungs-Umgebung von einem Rechner auf eine Hardwarekomponente für eine Automatisierungsanlage, wobei die Vorrichtung dazu eingerichtet ist, dass erfindungsgemäße Verfahren bzw. eine oder mehrere bevorzugte Ausführungsformen des erfindungsgemäßen Verfahrens durchzuführen.

Die Erfindung umfasst darüber hinaus ein Computerprogrammprodukt mit einem auf einem maschinenlesbaren Träger gespeicherten Programmcode zur Durchführung des erfindungsgemäßen Verfahrens bzw. einer oder mehrerer bevorzugter Varianten des erfindungsgemäßen Verfahrens, wenn der Programmcode auf einem Computer ausgeführt wird.

Ferner betrifft die Erfindung ein Computerprogramm mit einem Programmcode zur Durchführung des erfindungsgemäßen Verfahrens bzw. einer oder mehrerer bevorzugter Varianten des erfindungsgemäßen Verfahrens, wenn der Programmcode auf einem Computer ausgeführt wird.

Ferner betrifft die Erfindung eine Hardwarekomponenten für eine Automatisierungsanlage, die eine Software-Entwicklungs-Umgebung umfasst, welche mit dem erfindungsgemäßen Verfahren bzw. mit einem oder mehreren bevorzugten Varianten des erfindungsgemäßen Verfahrens migriert worden ist. Mit anderen Worten ist die Software-Entwicklungs-Umgebung die Software-Entwicklungs-Umgebung, welche im Schritt e) des erfindungsgemäßen Verfahrens erhalten wird.

Ausführungsbeispiele der Erfindung werden nachfolgend anhand der beigefügten Figuren detailliert beschrieben.

Es zeigen:
- Fig. 1: eine schematische Darstellung der Migration einer Software-Entwicklungs-Umgebung basierend auf einem bekannten Verfahren; und
- Fig. 2: eine schematische Darstellung der Migration einer Software-Entwicklungs-Umgebung basierend auf einer Variante des erfindungsgemäßen Verfahrens.

Ausgangspunkt der hier beschriebenen Ausführungsform des erfindungsgemäßen Verfahrens ist eine Software-Entwicklungs-Umgebung in der Form des bereits oben erwähnten TIA-Portals, mit dem ein Benutzer Software für eine speicherprogrammierbare Steuerung innerhalb einer Automatisierungsanlage erstellen kann. Üblicherweise läuft das TIA-Portal dabei auf einem separaten Rechner und nicht auf der speicherprogrammierbaren Steuerung. Ziel ist es nunmehr, das TIA-Portal auf die speicherprogrammierbare Steuerung zu migrieren, so dass direkt auf der Hardware dieser Steuerung entsprechende Software erstellt werden kann. Nach erfolgreicher Migration ist es lediglich notwendig, eine Benutzerschnittstelle an die speicherprogrammierbare Steuerung anzuschließen, um das TIA-Portal auf der Steuerung aufzurufen.

Um die Migration des TIA-Portals von einem separaten Rechner auf eine speicherprogrammierbare Steuerung zu erreichen, ist aus dem Stand der Technik der in Fig. 1 dargestellte Ansatz bekannt. Im linken Teil der Fig. 1 ist dabei ein separater Rechner in der Form eines PCs 1 gezeigt, auf dem das TIA-Portal läuft, das mit dem Bezugszeichen TP1 bezeichnet ist. Das Portal umfasst mehrere Programmbausteine und Schnittstellen, wobei bei Ausführung des Portals die entsprechenden Programmbausteine und Schnittstelle compiliert sind. Der Rechner 1 hat Windows als Betriebssystem OS1. Unter diesem Betriebssystem läuft als Laufzeitumgebung RT1 das an sich bekannte .NET Framework.

Im TIA-Portal TP1 läuft direkt auf dem Betriebssystem OS1 des Rechners 1 ein Programmbaustein PR1, der mit der Programmiersprache C++ erstellt ist. Auf einer höheren Ebene bzw. Schicht läuft ein Programmbaustein PR2, der in der bekannten Programmiersprache C++/CLI erstellt ist. Dieser Programmbaustein wird in der Laufzeitumgebung RT1 (d.h. im .NET Framework) ausgeführt. Darüber hinaus ist ein weiterer Programmbaustein PR3 vorgesehen, der in der bekannten Programmiersprache C# erstellt ist und ebenfalls im .NET Framework läuft.

Mittels des Programmbausteins PR1 werden Hardwareressourcen auf niedrigem Niveau (z.B. Netzwerk und Speicher) angesprochen, wohingegen Komponenten auf höherem Niveau über den Programmbaustein PR3 angesprochen werden. Der Programmbaustein PR2 dient als Schnittstelle zwischen den Programmbausteinen PR1 und PR3. Dem Programmbaustein PR1 ist eine C++-Schnittstelle IF1 zugeordnet, über welche Schnittstellenfunktionen bereitgestellt werden, mit denen der Programmbaustein PR2 Routinen des Programmbausteins PR1 aufrufen kann. Analog ist dem Programmbaustein PR2 eine C++/CLI-Schnittstelle IF2 zugeordnet, über welche Schnittstellenfunktionen bereitgestellt werden, mit denen der Programmbaustein PPR3 Routinen des Programmbausteins PR2 aufrufen kann.

Ziel ist es nunmehr, dass TIA-Portal TP1 auf eine speicherprogrammierbare Steuerung 2 zu migrieren, die in Fig. 1 rechts neben dem Rechner 1 wiedergegeben ist. Gelingt diese Migration, befindet sich auf der speicherprogrammierbaren Steuerung 2 das migrierte TIA-Portal TP2, das dort direkt als Software-Entwicklungs-Umgebung zur Erstellung von Software für die Steuerung 2 genutzt werden kann.

Im Folgenden wird anhand von Fig. 1 ein an sich bekannter Ansatz beschrieben, wie die Migration des TIA-Portals TP1 erreicht werden kann. Dabei wird auf die Programmbausteine bzw. Schnittstellen des TIA-Portals TP1 in uncompilierter Form (d.h. als Sourcecode) Bezug genommen.

Bei der Migration besteht das Problem, das als Betriebssystem auf der speicherprogrammierbaren Steuerung 2 nicht Windows, sondern Linux läuft. Für Linux gibt es nicht die Laufzeitumgebung .NET Framework, sondern eine Abwandlung dieser Laufzeitumgebung in der Form von .NET Core. Die Laufzeitumgebung .NET Core unterstützt jedoch nicht die Programmiersprache C++/CLI, so dass keine C++/CLI-Programmbausteine und keine C++/CLI-Schnittstellen in .NET Core verwendet werden können und folglich eine Umwandlung erforderlich ist. In Fig. 1 ist die Laufzeitumgebung .NET Core der speicherprogrammierbaren Steuerung 2 mit RT2 bezeichnet. Das Betriebssystem Linux, das auf der speicherprogrammierbaren Steuerung 2 läuft, ist hingegen mit OS2 bezeichnet.

Gemäß dem Verfahren der Fig. 1 wird der Programmbaustein PR1 mit Schnittstelle IF1 sowie der Programmbaustein PR3 unverändert in die speicherprogrammierbare Steuerung 2 übernommen, wie durch die Schritte S0 und S0' angedeutet ist. Zur Migration der C++/CLI-Schnittstelle IF2 wird gemäß Schritt S1' eine Konvertierung in eine äquivalente C#-Schnittstelle IF3 durchgeführt. Zur Konvertierung dieser Schnittstelle kann das an sich bekannte Tool Visual Studio IDE verwendet werden, mit dem eine automatische Konvertierung erreicht werden kann. Die Implementierung dieser Konvertierung liegt im Rahmen von fachmännischem Handeln und wird deshalb nicht im Detail beschrieben. Die erzeugten Schnittstellenfunktionen sind dabei mit *"Throwing a NotImplementedException"* markiert.

In einem nächsten Schritt S2' wird der Programmbaustein PR2 in der Programmiersprache C++/CLI in einen äquivalenten Programmbaustein PR2' gewandelt, der nunmehr jedoch in der Programmiersprache C# vorliegt. Da die Eigenschaften der Sprachen C++/CLI und C# deutlich unterschiedlich sind, kann diese Konvertierung jedoch nicht automatisiert durchgeführt werden, sondern sie muss manuell durch einen Benutzer umgesetzt werden. Dies ist sehr fehleranfällig und benötigt sehr viel Zeit.

In einem nächsten Schritt S3' wird schließlich basierend auf der bekannten Technologie P/Invoke aus der C++-Schnittstelle IF1 eine C#-P/Invoke-Schnittstelle IF1' generiert, welche die äquivalenten Schnittstellenfunktionen wie die Schnittstelle IF1 aufweist, jedoch auf C# basiert. Dabei ist es problematisch, dass der C++-Programmbaustein PR1 eine komplexe C++-Schnittstelle IF1 aufweist, die mehr als 20000 Schnittstellenfunktionen beinhaltet. Demzufolge muss der Schritt S3' auch manuell durch einen Benutzer durchgeführt werden. Bekannte Tools zur Generierung von P/Invoke-Schnittstellen können nicht verwendet werden, da die Anzahl der zu konvertierenden Schnittstellenfunktionen zu groß ist.

Am Ende des soeben beschriebenen Konvertierungsprozesses erhält man die Programmbausteine bzw. Schnittstellen PR1, IF1, IF1', PR2', IF3 und PR3. Die Komponenten PR1 und IF1 werden dann auf Linux compiliert, wohingegen die anderen Komponenten in der Laufzeitumgebung .NET Core compiliert werden. Somit werden die compilierten Komponenten PR1 und IF1 auf dem Betriebssystem Linux ausgeführt, wohingegen die anderen compilierten Komponenten in der Laufzeitumgebung .NET Core ausgeführt werden. Die Gesamtheit der Komponenten stellt das migrierte TIA-Portal TP2 auf der speicherprogrammierbaren Steuerung 2 dar.

Wie sich aus den obigen Ausführungen ergibt, ist eine Migration des TIA-Portals basierend auf dem Verfahren der Fig. 1 mit erheblichem manuellen Aufwand durch einen Benutzer verbunden. Im Rahmen der nachfolgend beschriebenen Ausführungsform kann demgegenüber das TIA-Portal von einem PC automatisiert auf eine speicherprogrammierbare Steuerung übertragen werden.

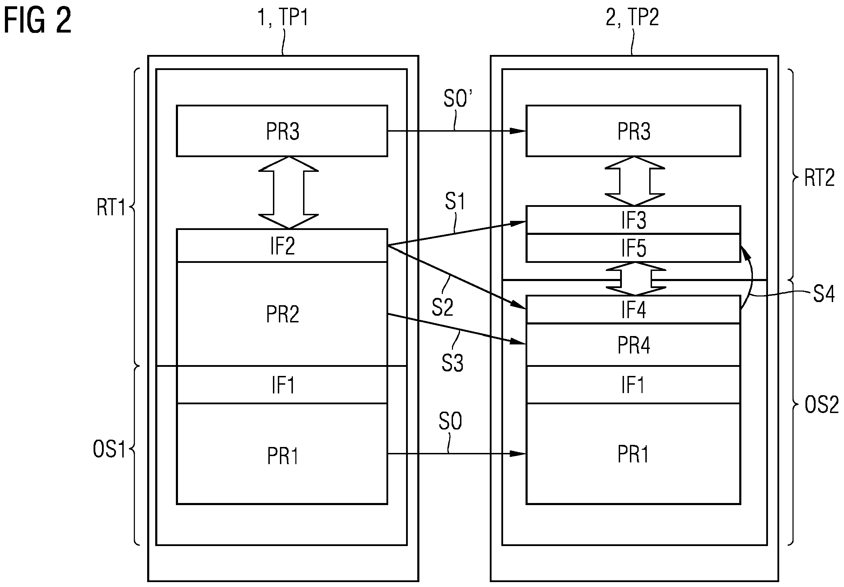

Fig. 2 zeigt in schematischer Darstellung eine Ausführungsform des erfindungsgemäßen Verfahrens. Im linken Teil der Fig. 2 ist analog zur Fig. 1 wiederum das ursprüngliche TIA-Portal TP1 auf dem PC 1 dargestellt. Zwecks Vermeidung von Wiederholungen werden die Komponenten des Portals TP1 nicht nochmals im Detail erläutert. Es ist lediglich darauf hinzuweisen, dass der C++-Programmbaustein PR1 eine Variante eines ersten Programmbausteins im Sinne von Anspruch 1 ist, dass die C++-Schnittstelle IF1 eine Variante einer ersten Schnittstelle im Sinne von Anspruch 1 ist, dass der C++/CLI-Programmbaustein PR2 eine Variante eines zweiten Programmbausteins im Sinne von Anspruch 1 ist, dass die C++/CLI-Schnittstelle IF2 eine Variante einer zweiten Schnittstelle im Sinne von Anspruch 1 ist und dass der C#-Programmbaustein PR3 eine Variante eines dritten Programmbausteins im Sinne von Anspruch 1 ist. Ferner entspricht C++ einer Variante einer ersten Programmiersprache im Sinne von Anspruch 1, C++/CLI einer Variante einer zweiten Programmiersprache im Sinne von Anspruch 1 und C# einer Variante einer dritten Programmiersprache im Sinne von Anspruch 1.

Darüber hinaus entspricht der weiter unten erläuterte Programmbaustein PR4 einer Variante eines vierten Programmbaustein im Sinne von Anspruch 1. Ferner entspricht die weiter unten erläuterte Schnittstelle IF3 einer Variante einer dritten Schnittstelle im Sinne von Anspruch 1, die weiter unten erläuterte Schnittstelle IF4 entspricht einer Variante einer vierten Schnittstelle im Sinne von Anspruch 1 und die weiter unten erläuterte Schnittstelle IF5 entspricht einer Variante einer fünften Schnittstelle im Sinne von Anspruch 1.

Im Rahmen des Verfahrens der Fig. 2 werden gemäß den Schritten S0 und S0' analog zu Fig. 1 die Programmbausteine PR1 und PR3 sowie die Schnittstelle IF1 unverändert beibehalten. In einem Schritt S1 wird die C++/CLI-Schnittstelle IF2 in eine C#-Schnittstelle IF3 gewandelt. Dieser Schritt ist identisch zu dem Schritt S1' der Fig. 1. Zur Wandlung wird wiederum das bekannte Tool Visual Studio IDE genutzt.

In einem zweiten Schritt S2 wird die C++/CLI-Schnittstelle IF2 ferner auch in eine äquivalente C++-Schnittstelle IF4 gewandelt. Da die Syntax von C++/CLI und C++ sehr ähnlich ist, kann dieser Schritt automatisiert durchgeführt werden. Die Erstellung eines entsprechenden Tools zur Automatisierung dieses Schritts liegt dabei im Rahmen von fachmännischem Handeln und wird nicht in Detail beschrieben.

In einem nächsten Schritt S3 wird der C++/CLI-Programmbaustein PR2 nunmehr in einen C++-Programmbaustein PR4 gewandelt. Dieser Schritt ist ein wesentlicher Unterschied gegenüber dem Verfahren der Fig. 1, bei dem der C++/CLI-Programmbaustein PR2 in einen C#-Programmbaustein PR2' gewandelt wird. Die Wandlung des Programmbausteins PR2 nach PR4 kann wiederum automatisiert durch ein geeignetes Tool durchgeführt werden, denn die beiden Sprachen C++/CLI und C++ sind sehr ähnlich. Die Erstellung eines entsprechenden Tools liegt im Rahmen von fachmännischem Handeln und wird nicht weiter im Detail beschrieben.

In einem nächsten Schritt S4 wird schließlich aus der C++-Schnittstelle IF4 eine C#-P/Invoke-Schnittstelle IF5 erzeugt. Diese Schnittstelle wandelt C#-Schnittstellenfunktionen der Schnittstelle IF3 in C++-Schnittstellenfunktionen der Schnittstelle IF4. Die C++-Schnittstelle IF4 hat aufgrund ihrer Konvertierung aus der C++/CLI-Schnittstelle IF2 einen wesentlich geringeren Funktionsumfang als die C++-Schnittstelle IF1. Üblicherweise sind nur wenige hundert Schnittstellenfunktionen (z.B. 150 Schnittstellenfunktionen) vorgesehen. Demzufolge kann die Erzeugung der P/Invoke-Schnittstelle IF5 automatisiert durchgeführt werden, z.B. indem das an sich bekannte Open-Source-Tool CppSharp genutzt wird. Die genaue Implementierung zur Erzeugung der P/Invoke-Schnittstelle IF5 liegt im Rahmen von fachmännischem Handeln und wird nicht weiter im Detail beschrieben.

Schließlich wird der unveränderte C++-Programmbaustein PR1 mit zugeordneter C++-Schnittstelle IF1 sowie der generierte C++-Programmbaustein PR4 und die generierte C++-Schnittstelle IF4 in eine Shared Library auf dem Betriebssystem OS2 (Linux) compiliert. Demgegenüber werden die Schnittstellen IF3 und IF5 sowie der Programmbaustein PR3 in der Laufzeitumgebung RT2 als .NET Core Assemblies compiliert. Auf diese Weise erhält man das migrierte TIA-Portal TP2 auf der speicherprogrammierbaren Steuerung 2 auf automatisierte Art und Weise.

Die im Vorangegangenen beschriebene Ausführungsform der Erfindung weist eine Reihe von Vorteilen auf. Insbesondere werden keine Virtualisierungs-Lösungen, wie virtuelle Maschinen oder redundante Windows-Schichten (z.B. Wine), verwendet. Diese Lösungen sind daten- und ressourcenintensiv und nicht für Hardwarekomponenten in Automatisierungssystemen und insbesondere nicht für speicherprogrammierbare Steuerungen geeignet. Durch die Verwendung einer wohldefinierten zusätzlichen C++-Schnittstelle, die aus einer C++/CLI-Schnittstelle hervorgeht, ist es nunmehr möglich, ein bekanntes Tool, wie z.B. CppSharp, zu verwenden, um einen P/Invoke Layer zu generieren. Aufgrund der Ähnlichkeit der Syntax von C++/CLI und C++ kann dies auf einfache Weise automatisch realisiert werden. Ferner ist keine manuelle Wandlung eines C++/CLI-Programmbausteins in einen C#-Programmbaustein erforderlich. Stattdessen wird ein C++/CLI-Programmbaustein in einen C++-Programmbaustein konvertiert, was ebenfalls automatisch bewirkt werden kann.

## Patentansprüche

1. Verfahren zur computer-implementierten Migration einer Software-Entwicklungs-Umgebung (TP1) von einem Rechner (1) auf eine Hardwarekomponente (2) für eine Automatisierungsanlage, wobei die Software-Entwicklungs-Umgebung (TP1) als Sourcecode einen ersten Programmbaustein (PR1) in einer ersten Programmiersprache zur Ausführung auf dem Betriebssystem (OS1) des Rechners (1), einen zweiten Programmbaustein (PR2) in einer zweiten Programmiersprache zur Ausführung in einer Laufzeitumgebung (RT1) unter dem Betriebssystem (OS1) des Rechners (1) sowie einen dritten Programmbaustein (PR3) in einer dritten Programmiersprache zur Ausführung in der Laufzeitumgebung (RT1) unter dem Betriebssystem (OS1) des Rechners (1) umfasst, wobei dem ersten Programmbaustein (PR1) eine erste Schnittstelle (IF1) in der ersten Programmiersprache zugeordnet ist, auf welche der zweite Programmbaustein (PR2) über Schnittstellenfunktionen zum Aufruf von Routinen des ersten Programmbausteins (PR1) zugreift, und wobei dem zweiten Programmbaustein (PR2) eine zweite Schnittstelle (IF2) zugeordnet ist, auf welche der dritte Programmbaustein (PR3) über Schnittstellenfunktionen zum Aufruf von Routinen des zweiten Programmbausteins (PR2) zugreift,
**dadurch gekennzeichnet, dass**
a) aus der zweiten Schnittstelle (IF2) eine äquivalente dritte Schnittstelle (IF3) in der dritten Programmiersprache erzeugt wird, wobei der dritte Programmbaustein (PR3) auf die dritte Schnittstelle (IF3) zugreift;
b) aus der zweiten Schnittstelle (IF2) eine äquivalente vierte Schnittstelle (IF4) in der ersten Programmiersprache erzeugt wird;
c) der zweite Programmbaustein (PR2) in einen äquivalenten vierten Programmbaustein (PR4) in der ersten Programmiersprache gewandelt wird und die vierte Schnittstelle (IF4) dem vierten Programmbaustein (PR4) zugeordnet wird;
d) aus der vierten Schnittstelle (IF4) eine fünfte Schnittstelle (IF5) erzeugt wird, welche Schnittstellenfunktionen der dritten Schnittstelle (IF3) in Schnittstellenfunktionen der vierten Schnittstelle (IF4) wandelt;
e) der erste Programmbaustein (PR1) mit zugeordneter erster Schnittstelle (IF1) und der vierte Programmbaustein (PR4) mit zugeordneter vierter Schnittstelle (IF4) auf dem Betriebssystem (OS2) der Hardwarekomponente (2) compiliert werden und der dritte Programmbaustein (PR3) sowie die dritte und fünfte Schnittstelle (IF3, IF5) in einer Laufzeitumgebung (RT2) unter dem Betriebssystem (OS2) der Hardwarekomponente (2) compiliert werden, wodurch eine migrierte Software-Entwicklungs-Umgebung (TP2) auf der Hardwarekomponente (2) erzeugt wird.

2. Verfahren nach Anspruch 1, **dadurch gekennzeichnet, dass** das Betriebssystem (OS1) des Rechners (1) Windows ist und die Laufzeitumgebung unter dem Betriebssystem (OS1) des Rechners (1) das .NET Framework ist.

3. Verfahren nach Anspruch 2, **dadurch gekennzeichnet, dass** die erste Programmiersprache C++ und die zweite Programmiersprache C++/CLI und die dritte Programmiersprache C# ist.

4. Verfahren nach Anspruch 3, **dadurch gekennzeichnet, dass** die Erzeugung der dritten Schnittstelle (IF3) aus der zweiten Schnittstelle (IF2) mittels des Tools Visual Studio IDE bewirkt wird.

5. Verfahren nach Anspruch 3 oder 4, **dadurch gekennzeichnet, dass** die fünfte Schnittstelle (IF5) eine P/Invoke-Schnittstelle ist und vorzugsweise mittels des Tools CppSharp erzeugt wird.

6. Verfahren nach einem der vorhergehenden Ansprüche, **dadurch gekennzeichnet, dass** das Betriebssystem (OS2) des zweiten Rechners (2) Linux ist und/oder die Laufzeitumgebung (TP2) der Hardwarekomponente (2) .NET Core ist.

7. Verfahren nach einem der vorhergehenden Ansprüche, **dadurch gekennzeichnet, dass** die zu migrierende Software-Entwicklungs-Umgebung (TP1) ein TIA-Portal ist.

8. Verfahren nach einem der vorhergehenden Ansprüche, **dadurch gekennzeichnet, dass** der Rechner (1) ein PC ist und/oder die Hardwarekomponente (2) eine speicherprogrammierbare Steuerung ist.

9. Vorrichtung zur computer-implementierten Migration einer Software-Entwicklungs-Umgebung (TP1) von einem Rechner (1) auf eine Hardwarekomponente (2) für eine Automatisierungsanlage, wobei die Software-Entwicklungs-Umgebung (TP1) als Sourcecode einen ersten Programmbaustein (PR1) in einer ersten Programmiersprache zur Ausführung auf dem Betriebssystem (OS1) des Rechners (1), einen zweiten Programmbaustein (PR2) in einer zweiten Programmiersprache zur Ausführung in einer Laufzeitumgebung (RT1) unter dem Betriebssystem (OS1) des Rechners (1) sowie einen dritten Programmbaustein (PR3) in einer dritten Programmiersprache zur Ausführung in der Laufzeitumgebung (RT1) unter dem Betriebssystem (OS1) des Rechners (1) umfasst, wobei dem ersten Programmbaustein (PR1) eine erste Schnittstelle (IF1) in der ersten Programmiersprache zugeordnet ist, auf welche der zweite Programmbaustein (PR2) über Schnittstellenfunktionen zum Aufruf von Routinen des ersten Programmbausteins (PR1) zugreift, und wobei dem zweiten Programmbaustein (PR2) eine zweite Schnittstelle (IF2) zugeordnet ist, auf welche der dritte Programmbaustein (PR3) über Schnittstellenfunktionen zum Aufruf von Routinen des zweiten Programmbausteins (PR2) zugreift,
**dadurch gekennzeichnet, dass**
die Vorrichtung zur Durchführung eines Verfahrens eingerichtet ist, bei dem
a) aus der zweiten Schnittstelle (IF2) eine äquivalente dritte Schnittstelle (IF3) in der dritten Programmiersprache erzeugt wird, wobei der dritte Programmbaustein (PR3) auf die dritte Schnittstelle (IF3) zugreift;
b) aus der zweiten Schnittstelle (IF2) eine äquivalente vierte Schnittstelle (IF4) in der ersten Programmiersprache erzeugt wird;
c) der zweite Programmbaustein (PR2) in einen äquivalenten vierten Programmbaustein (PR4) in der ersten Programmiersprache gewandelt wird und die vierte Schnittstelle (IF4) dem vierten Programmbaustein (PR4) zugeordnet wird;
d) aus der vierten Schnittstelle (IF4) eine fünfte Schnittstelle (IF5) erzeugt wird, welche Schnittstellenfunktionen der dritten Schnittstelle (IF3) in Schnittstellenfunktionen der vierten Schnittstelle (IF4) wandelt;
e) der erste Programmbaustein (PR1) mit zugeordneter erster Schnittstelle (IF1) und der vierte Programmbaustein (PR4) mit zugeordneter vierter Schnittstelle (IF4) auf dem Betriebssystem (OS2) der Hardwarekomponente (2) compiliert werden und der dritte Programmbaustein (PR3) sowie die dritte und fünfte Schnittstelle (IF3, IF5) in einer Laufzeitumgebung (RT2) unter dem Betriebssystem (OS2) der Hardwarekomponente (2) compiliert werden, wodurch eine migrierte Software-Entwicklungs-Umgebung (TP2) auf der Hardwarekomponente (2) erzeugt wird.

10. Vorrichtung nach Anspruch 9, **dadurch gekennzeichnet, dass** die Vorrichtung zur Durchführung eines Verfahrens nach einem der Ansprüche 2 bis 8 eingerichtet ist.

11. Computerprogrammprodukt mit einem auf einem maschinenlesbaren Träger gespeicherten Programmcode zur Durchführung eines Verfahrens nach einem Ansprüche 1 bis 8, wenn der Programmcode auf einem Computer ausgeführt wird.

12. Computerprogramm mit einem Programmcode zur Durchführung eines Verfahrens nach einem der Ansprüche 1 bis 8, wenn der Programmcode auf einem Computer ausgeführt wird.

13. Hardwarekomponente für eine Automatisierungsanlage, umfassend eine Software-Entwicklungs-Umgebung, die mit einem Verfahren nach einem der Ansprüche 1 bis 8 migriert worden ist.
